(19) Europäisches Patentamt
European Patent Office
Office européen des brevets

(11) **EP 4 776 662 A1**

(12) **EUROPEAN PATENT APPLICATION**
published in accordance with Art. 153(4) EPC

(43) Date of publication:
**15.07.2026 Bulletin 2026/29**

(21) Application number: **24861873.8**

(22) Date of filing: **28.08.2024**

(51) International Patent Classification (IPC):
*H04W 4/80* (2018.01)

(52) Cooperative Patent Classification (CPC):
**G06K 7/00; G06K 7/10; G06K 19/07; H04W 4/80;
H04W 72/0453; H04W 72/50**

(86) International application number:
**PCT/CN2024/114953**

(87) International publication number:
**WO 2025/051029 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.09.2023 CN 202311136513**

(71) Applicant: VIVO MOBILE COMMUNICATION CO.,
LTD.
**Dongguan, Guangdong 523863 (CN)**

(72) Inventors:
• **SONG, Zhenyuan**
**Dongguan, Guangdong 523863 (CN)**
• **WU, Kai**
**Dongguan, Guangdong 523863 (CN)**

(74) Representative: **Walaski, Jan Filip et al**
**Venner Shipley LLP
TIDE Bankside
8 Emerson Street
London SE1 9DU (GB)**

(54) **TRANSMISSION METHOD AND APPARATUS, ANSWERING DEVICE, AND READ-WRITE DEVICE**

(57)    The present application relates to the technical field of communications, and discloses a transmission method and apparatus, an answering device, and a read-write device. The transmission method of embodiments of the present application comprises: an answering device determines a first quantity, wherein the first quantity is the quantity of resource objects available to the answering device, and the resource objects comprise a resource or a resource group; and the answering device executes a first operation, wherein the first operation comprises at least one of the following: on the basis of the first quantity and a first random number generated by the answering device, determining whether to transmit information to a read-write device; and on the basis of the first quantity and the first random number generated by the answering device, determining a transmission resource from the available resource objects.

FIG. 4

Description

CROSS-REFERENCE TO RELATED APPLICATIONS

This application claims priority to Chinese Patent Application No. 202311136513.0 filed in China on September 4, 2023, which is incorporated herein by reference in its entirety.

TECHNICAL FIELD

The present application relates to the technical field of communication, and in particular, to a transmission method and apparatus, a responder device, and a reader/writer device.

BACKGROUND

Currently, in radio frequency identification (Radio Frequency Identification, RFID), a reader/writer device and a responder device interact in an inventory mode. For example, communication between a reader (Reader) and a tag (Tag) is performed in the inventory (Inventory) mode. In particular, during an inventory process, the reader/writer device transmits a query (Query) command. Upon receiving the query command, the responder device generates a random number A. When the random number A is zero, the responder device responds to the query command from the reader/writer device by generating a 16-bit random number, i.e., RN16, and transmits the RN16 to the reader/writer device. After receiving the RN16, the reader/writer device verifies the RN16 to confirm whether the responder device has correctly responded to the query command from the reader/writer device. In a case that the reader/writer device determines that the responder device has correctly responded to the query command, the reader/writer device transmits an acknowledge (acknowledge, ACK) command to the responder device, after which the responder device can transmit the relevant data to the reader/writer device. It can be seen that the above inventory method supports the reader/writer device in inventorying only one responder device at a time, resulting in low flexibility.

SUMMARY

Embodiments of the present application provide a transmission method and apparatus, a responder device, and a reader/writer device, which can enhance the flexibility of a reader/writer device in inventorying a responder device.
In a first aspect, there is provided a transmission method, the method including:

determining, by a responder device, a first quantity, the first quantity being the number of resource objects available to the responder device, and the resource objects including resources or resource groups; and
performing, by the responder device, a first operation, the first operation including at least one of the following:

determining, according to the first quantity and a first random number generated by the responder device, whether to transmit information to a reader/writer device; and
determining, according to the first quantity and the first random number generated by the responder device, a transmission resource from the available resource objects.

In a second aspect, there is provided a transmission apparatus, the apparatus including:

a first determination module, configured to determine a first quantity, the first quantity being the number of resource objects available to a responder device, and the resource objects including resources or resource groups; and
an execution module, configured to perform a first operation, the first operation including at least one of the following:

determining, according to the first quantity and a first random number generated by the responder device, whether to transmit information to a reader/writer device; and
determining, according to the first quantity and the first random number generated by the responder device, a transmission resource from the available resource objects.

In a third aspect, there is provided a transmission method, the method including:

determining, by a reader/writer device, a first quantity, the first quantity being the number of resource objects available to a responder device, and the resource objects including resources or resource groups; and
indicating, by the reader/writer device, at least one of the first quantity and a target step size to the responder device, the target step size being a step size for the responder device to modify a random number, and the target step size being determined according to the first quantity.

In a fourth aspect, there is provided a transmission apparatus, the apparatus including:

a second determination module, configured to determine a first quantity, the first quantity being the number of resource objects available to a responder device, and the resource objects including resources or resource groups; and
an indication module, configured to indicate at least one of the first quantity and a target step size to the responder device, the target step size being a step size for the responder device to modify a random number, and the target step size being determined according to the first quantity.

In a fifth aspect, there is provided a responder device including a processor and a memory, the memory storing programs or instructions executable by the processor, and the programs or instructions, when executed by the processor, implementing steps of the method according to the first aspect.

In a sixth aspect, there is provided a responder device including a processor and a communication interface, where the processor is configured to: determine a first quantity, the first quantity being the number of resource objects available to a responder device, and the resource objects including resources or resource groups; and perform a first operation, the first operation including at least one of the following: determining, according to the first quantity and a first random number generated by the responder device, whether to transmit information to a reader/writer device; and determining, according to the first quantity and the first random number generated by the responder device, a transmission resource from the available resource objects.

In a seventh aspect, there is provided a reader/writer device including a processor and a memory, the memory storing programs or instructions executable by the processor, and the programs or instructions, when executed by the processor, implementing steps of the method according to the third aspect.

In an eighth aspect, there is provided a reader/writer device including a processor and a communication interface, where the processor is configured to determine a first quantity, the first quantity being the number of resource objects available to a responder device, and the resource objects including resources or resource groups; and the communication interface is configured to indicate at least one of the first quantity and a target step size to the responder device, the target step size being a step size for the responder device to modify a random number, and the target step size being determined according to the first quantity.

In a ninth aspect, there is provided a transmission system including a responder device and a reader/writer device, where the responder device may be configured to perform steps of the transmission method according to the first aspect, and the reader/writer device may be configured to perform steps of the transmission method according to the third aspect.

In a tenth aspect, there is provided a readable storage medium having programs or instructions stored therein, the programs or the instructions, when executed by a processor, implementing steps of the method according to the first aspect, or implementing steps of the method according to the third aspect.

In an eleventh aspect, there is provided a chip including a processor and a communication interface, where the communication interface is coupled to the processor, and the processor is configured to execute programs or instructions to implement steps of the method according to the first aspect, or implement steps of the method according to the third aspect.

In a twelfth aspect, there is provided a computer program/program product, where the computer program/program product is stored in a storage medium and executed by at least one processor to implement steps of the method according to the first aspect, or implement steps of the method according to the third aspect.

In the embodiments of the present application, the responder device determines a first quantity, the first quantity being the number of resource objects available to a responder device, and the resource objects including resources or resource groups. The responder device performs a first operation, the first operation including at least one of the following: determining, according to the first quantity and a first random number generated by the responder device, whether to transmit information to a reader/writer device; and determining, according to the first quantity and the first random number generated by the responder device, a transmission resource from the available resource objects. That is, in the embodiments of the present application, the responder device determines, based on the number of available resource objects and the random number generated by the responder device, at least one of whether to respond to the reader/writer device and a transmission resource for transmitting information to the reader/writer device. In this manner, the number of responder devices that the reader/writer device can inventory in a single inventory can be flexibly adjusted according to the number of resource objects available to the responder device, thereby enhancing the flexibility of the reader/writer device in inventorying the responder device.

**BRIEF DESCRIPTION OF THE DRAWINGS**

FIG. 1 is a block diagram of a wireless communication system that can be applied to an embodiment of the present application;

FIG. 2 is a block diagram of another wireless communication system that can be applied to an embodiment of the present application;

FIG. 3 is a schematic diagram of a transmission and reception process between a reader and a tag according to an embodiment of the present application;

FIG. 4 is a flowchart of a transmission method according to an embodiment of the present application;

FIG. 5a is a first schematic diagram of a resource group according to an embodiment of the present application;

FIG. 5b is a second schematic diagram of a resource group according to an embodiment of the present application;

FIG. 5c is a third schematic diagram of a resource group according to an embodiment of the present application;

FIG. 6a is a first schematic diagram of a resource group for control signaling transmitted by a reader/writer device according to an embodiment of the present application;

FIG. 6b is a first schematic diagram of a resource group detected by a responder device according to an embodiment of the present application;

FIG. 6c is a first schematic diagram of random numbers generated by each responder device according to an embodiment of the present application;

FIG. 7a is a second schematic diagram of a resource group for control signaling transmitted by a reader/writer device according to an embodiment of the present application;

FIG. 7b is a second schematic diagram of a resource group detected by a responder device according to an embodiment of the present application;

FIG. 7c is a second schematic diagram of random numbers generated by each responder device according to an embodiment of the present application;

FIG. 8 is a flowchart of another transmission method according to an embodiment of the present application;

FIG. 9 is a structural diagram of a transmission apparatus according to an embodiment of the present application;

FIG. 10 is a structural diagram of another transmission apparatus according to an embodiment of the present application;

FIG. 11 is a structural diagram of a communication device according to an embodiment of the present application;

FIG. 12 is a structural diagram of a responder device according to an embodiment of the present application; and

FIG. 13 is a structural diagram of a reader/writer device according to an embodiment of the present application

**DETAILED DESCRIPTION**

Technical solutions in embodiments of the present application are clearly described below with reference to the drawings in the embodiments of the present application. It is apparent that the described embodiments are merely part of rather than all of the embodiments of the present application. All other embodiments obtained by a person of ordinary skill in the art based on the embodiments of the present application fall within the scope of protection of the present application.

The terms "first" and "second" in the present application are used to distinguish similar objects and are not intended to describe any specific order or sequence. It is to be understood that such terms used herein are interchangeable as appropriate, so that the embodiments of the present application can be implemented in sequences other than those illustrated or described herein. The objects distinguished by "first" and "second" are generally of the same type and are not limited in number, for example, a first object may be one or more. In addition, the term "or" in the present application denotes at least one of the connected objects. For example, "A or B" encompasses three scenarios: scenario one: including A but not B; scenario two: including B but not A; and scenario three: including both A and B. The character "/" in this specification generally indicates an "or" relationship between the associated objects.

The term "indication" in the present application may refer to either a direct indication (i.e., an explicit indication) or an indirect indication (i.e., an implicit indication). The direct indication can be understood as a sender explicitly informing a receiver of specific information, operations to be performed, requested results, or the like in the transmitted indication. The indirect indication can be understood as the receiver determining, according to the indication transmitted by the sender, the corresponding information, or making a determination and determining, according to the determination, the operations to be performed or the requested results.

It is to be noted that the technology described in the embodiments of the present application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or other systems. The terms "system" and "network" in the embodiments of the present application are often used interchangeably. The described technology can be applied not only to the systems and radio technologies described above, but also to other systems and radio technologies. The following description illustrates a new radio (New Radio, NR) system for exemplary purposes, and NR terminology is used in most of the subsequent description. However, these technologies may be applied to systems other than NR systems, such as 6th generation (6th Generation, 6G) communication systems.

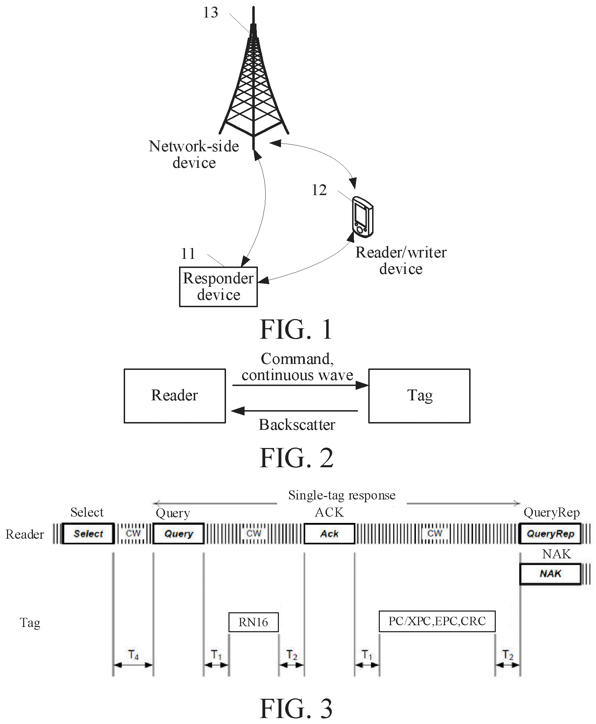

FIG. 1 shows a block diagram of a wireless communication system that can be applied to an embodiment of the present application. The wireless communication system includes a responder device 11, a reader/writer device 12, and a network-side device 13. The responder device 11 above may be any device that supports backscatter communication technology or radio frequency identification technology, including but not limited to a tag (Tag) or a terminal. Exemplarily, the above tag may be an RFID tag, which is a common name for RFID. Radio frequency identification technology can be classified into active, passive, and semi-active types. Accordingly, the above responder device may include an active responder device, a passive responder device, or a semi-active responder device, where the above passive responder device may be referred to as a passive Internet of Things (passive IOT) device. The responder device may communicate by backscattering radio frequency (Radio Frequency, RF) signals for signal transmission, or, in the case of some active responder devices, by actively generating signals for signal transmission. Since the responder device can obtain energy from the environment, such as ambient RF energy, thermal energy, wind energy, and kinetic energy, the above responder device may be referred to as an ambient Internet of Things (Ambient IoT) device. The above reader/writer device 12 may serve as a control-side device for the above responder device 11 and may include, but is not limited to, a reader, a base station, an integrated access backhaul (Integrated Access Backhaul, IAB) node, a network-controlled repeater (Network-controlled Repeater, NCR) node, a reconfigurable intelligent surface (Reconfigurable Intelligent Surface, RIS) node, or a terminal.

The above terminal may be a responder-device-side device, such as a mobile phone, tablet personal computer (Tablet Personal Computer), laptop computer (Laptop Computer), notebook computer, personal digital assistant (Personal Digital Assistant, PDA), handheld computer, netbook, ultra-mobile personal computer (Ultra-mobile Personal Computer, UMPC), mobile Internet device (Mobile Internet Device, MID), augmented reality (Augmented Reality, AR) device, virtual reality (Virtual Reality, VR) device, robot, wearable device (Wearable Device), flight vehicle (Flight Vehicle), vehicle user equipment (Vehicle User Equipment, VUE), shipborne device, pedestrian user equipment (Pedestrian User Equipment, PUE), smart home device (home device with wireless communication capabilities, such as a refrigerator, television, washing machine, or furniture), game console, personal computer (Personal Computer, PC), automated teller machine, or self-service terminal. The wearable devices include smart watches, smart wristbands, smart earphones, smart glasses, smart jewelry (such as smart bracelets, smart bangles, smart rings, smart necklaces, smart ankle bracelets, and smart anklets), smart armbands, smart clothing, and the like. The vehicle user equipment may be referred to as a vehicle responder device, vehicle controller, vehicle module, vehicle component, vehicle chip, vehicle unit, or the like. It is to be noted that the embodiments of the present application do not limit the specific type of the terminal.

The network-side device 13 may include an access network device or a core network device, where the access network device may be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as node B (Node B, NB), evolved node B (Evolved Node B, eNB), the next generation node B (the Next Generation Node B, gNB), new radio node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home node B (Home Node B, HNB), home evolved node B (Home Evolved Node B), transmission reception point (Transmission Reception Point, TRP), or any other suitable term in the field, provided the same technical effect is achieved. The base station is not limited to a specific technical term. It is to be noted that, in the embodiments of the present application, the base station in the NR system is used merely as an example for illustration, and the specific type of the base station is not limited.

The core network device may include, but is not limited to, at least one of the following: core network nodes, core network functions, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized Network Configuration, CNC), network repository function (Network Repository Function, NRF), network exposure function (Network Exposure Function, NEF), local NEF (Local NEF, L-NEF), binding support function (Binding Support Function, BSF), application function (Application Function, AF), and the like. It is to be noted that in the embodiments of the present application, the core network device in the NR system is used merely as an example for illustration, and the specific type of the core network device is not limited.

For ease of understanding, some aspects involved in the embodiments of the present application are described below.

1. Backscatter Communication (Backscatter Communication, BSC)

Backscatter communication refers to a mechanism in which a backscatter communication device modulates radio frequency signals from other devices or from the environment to transmit its own information. For example, as shown in FIG. 2, a reader (Reader) transmits a continuous wave to a tag (Tag) to deliver control commands, and the tag backscatters the radio frequency signal transmitted by the reader to convey information back to the reader.

Exemplarily, the above backscatter communication devices may include the following:

Device A (Device A): a backscatter communication device in a conventional RFID system, generally a tag (Tag), which is a passive Internet of Things (Internet of Things, IoT) device (Passive-IoT);
Device B (Device B): a semi-passive (semi-passive) IoT device, whose downlink reception or uplink reflection has an amplification capability;
Device C (Device C): a device having an active transmission capability (an active device), which can autonomously generate signals without requiring excitation from an external excitation signal source.

The energy of the above backscatter communication devices may be harvested from the environment, for example, from ambient radio frequency (Radio Frequency, RF) signals, thermal energy, kinetic energy, wind energy, and the like. Accordingly, the above backscatter communication devices may be referred to as ambient Internet of Things devices (Ambient IoT devices).

For a transmission mode based on backscattering, one simple implementation is that when the tag needs to transmit a "1", the tag reflects the incident carrier signal, and when the tag needs to transmit a "0", the tag does not reflect the signal.

The backscatter communication device adjusts its internal impedance to control a reflection coefficient $\Gamma$ of a circuit, thereby changing the amplitude, frequency, phase, or the like of an incident signal to achieve signal modulation. A reflection coefficient of the signal may be expressed as:

$$\Gamma = (Z\_1 - Z\_0)/(Z\_1 + Z\_0) = |\Gamma|\, e^{\wedge}(j\theta\_T),$$

where $Z\_0$ is the antenna characteristic impedance, and $Z\_1$ is the load impedance. Assuming that the incident signal is $S\_in\,(t)$, the output signal is $S\_out\,(t) = S\_in\,(t)|\Gamma|\, e^{\wedge}(j\theta\_T)$. Therefore, corresponding amplitude modulation, frequency modulation, or phase modulation can be implemented by properly controlling the reflection coefficient.

2. Information transmission between the Reader and the Tag in RFID

The commands operated by the reader may be as shown in Table 1.

Table 1

| Operation Type | Command | Function |
|---|---|---|
| Select (Select) | Select (Select) | Select a tag |

(continued)

| Operation Type | Command | Function |
|---|---|---|
| Inventory (Inventory) | Query (Query) | Initiate an inventory operation<br>Generate a random number to determine the response time |
| | Query Adjust (Query Adjust) | Adjust the number of slots (Slot) originally assigned to the tag |
| | QueryRep (QueryRep) | The tag decreases its slot number |
| | Electronic Product Code (Electronic Product Code, EPC) Acknowledgement (ACK) | A reader transmits a command in response to a tag |
| | NAK | A command transmitted by a reader<br>A tag returns to an arbitrate (Arbitrate) state |
| Access (Access) | Random request (Req_RN) | Request a tag to generate a random number |
| | Read (Read) | Read data from a location in the memory of a tag |
| | Write (Write) | Write data into the memory of a tag |
| | Kill (Kill) | No response is made to any reader anymore<br>Prevent privacy leakage<br>A tag becomes unusable |
| | Lock (Lock) | A tag can no longer perform a writing action<br>Prevent data from being arbitrarily changed |
| | Access (Access) (optional) | A tag is caused to change from an open (Open) state to a secure (Secure) state when the tag has a password |
| | Block Write (BlockWrite) (optional) | Write into multiple blocks at a time |
| | Lock Erase (Lock Erase) (optional) | Erase multiple blocks from the memory of a single tag |

The states of the above tag (Tag) may be as shown in Table 2.

Table 2

| Tag State | Description |
|---|---|
| Ready (Ready) | Not in the current inventory operation |
| Arbitrate (Arbitrate) | The tag currently belongs to a specific inventory operation<br>Represent that the value of a slot is not zero, indicating remaining a waiting state |
| Reply (Reply) | Generate a 16-bit random number for a reader<br>Upon receiving an ACK message, the tag responds<br>Return to an arbitrate state when no ACK message is received |
| Acknowledge (Acknowledge) | Enter any state other than a killed state from this state |
| Open (Open) | When a tag with a non-zero password in the response state receives a random request command |
| Secure (Secure) | When a tag with a zero password in the response state receives a random request command from a reader |
| Killed (Killed) | Permanently unavailable |

Exemplarily, the transmission and reception process between the reader and the tag is illustrated in FIG. 3. In current ultra high frequency (Ultra High Frequency, UHF) RFID protocol design, under inventory mode, the reader first transmits a query command (Query), after which the tag replies (Reply), i.e., generating a 16-bit random number (RN16) for the reader. The reader then transmits an ACK command to the tag, and the tag transmits the corresponding data to the reader. For example, the tag transmits the protocol control (Protocol Control, PC)/extended protocol control (Extended Protocol Control, XPC), the electronic product code (Electronic Product Code, EPC), and the cyclic redundancy check (Cyclic Redundancy Check, CRC) of the data packet (Packet) to the reader.

3. Reader inventory of tags

In the inventory process between the reader and tags, a reader can inventory only one tag during a single inventory. If multiple tags are detected by the reader simultaneously, a conflict resolution mechanism is triggered, and the inventory process is re-initiated until all conflicts are resolved. In this case, the inventory efficiency is relatively low.

The transmission method according to the embodiments of the present application is described in detail below with reference to the drawings, through some embodiments and the application scenarios.

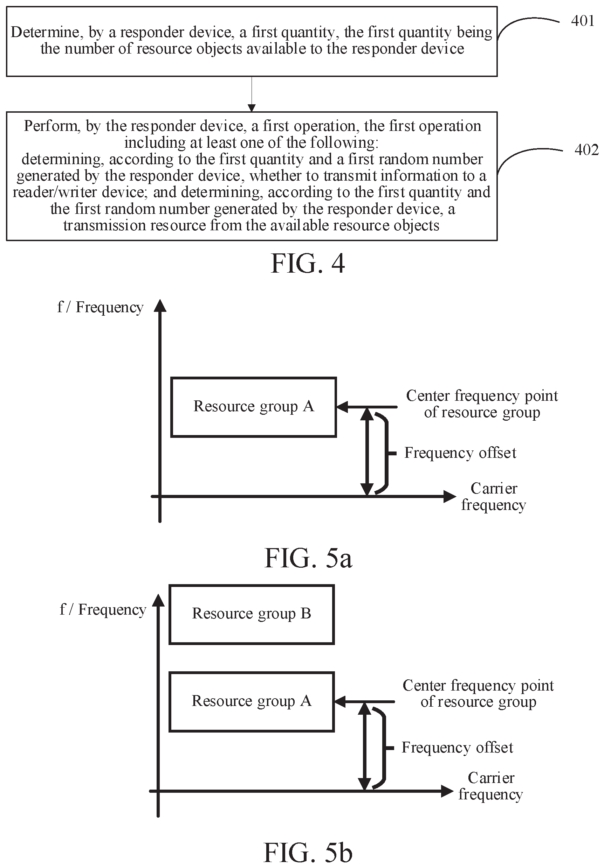

Referring to FIG. 4, FIG. 4 is a flowchart of a transmission method according to an embodiment of the present application, and the method may be performed by a responder device. The responder device may refer to the foregoing relevant description of the responder device 11, which is not repeated herein.

As shown in FIG. 4, the transmission method according to the embodiments of the present application includes the following steps:

In step 401, the responder device determines a first quantity, the first quantity being the number of resource objects available to the responder device, and the resource objects including resources or resource groups.

In this embodiment, the above first quantity is the number of resources or the number of resource groups available to the responder device. For example, the above first quantity may be the number of frequency resources or the number of frequency resource groups available to the responder device. The above resource groups may be referred to as resource blocks.

Exemplarily, the above first quantity may be configured or preconfigured by a network-side device, indicated by a reader/writer device, or determined by the responder device according to the number of resource objects carrying control commands transmitted by the reader/writer device.

It is to be noted that the above first quantity may be greater than or equal to 1. In addition, in some optional embodiments, the above first quantity may be understood as the number of resource objects available to the responder device for parallel transmission based on frequency division multiplexing (Frequency Division Multiplexing, FDM).

In step 402, the responder device performs a first operation, the first operation including at least one of the following:

determining, according to the first quantity and a first random number generated by the responder device, whether to transmit information to a reader/writer device; and
determining, according to the first quantity and the first random number generated by the responder device, a transmission resource from the available resource objects.

In this embodiment, the above first random number may be a random number within a first value range. The first value range may be defined by the protocol, configured or preconfigured by a network-side device, or determined according to a count parameter indicated by the reader/writer device.

In some optional embodiments, a value range of the first random number is $[0, 2^Q-1]$, where Q is a count parameter received by the responder device from the reader/writer device, and Q is an integer greater than or equal to 1.

The responder device determines whether to transmit information to the reader/writer device according to the first quantity and the first random number generated by the responder device. Exemplarily, the responder device may determine to transmit information to the reader/writer device in a case that the first random number satisfies a preset condition, that is, the responder device responds to the reader/writer device. The above satisfying the preset condition may include that the first random number falls within a second value range, or that the first random number is less than or equal to the first quantity. The above second value range includes N integers from the first value range, where N represents the first quantity. For example, if the above first value range is [0, 15] and N is 3, the above second value range may include any three integers within [0, 15]. For example, the above second value range may include 0, 1, and 2; or the above second value range may include 1, 2, and 3; or the above second value range may include 13, 14, and 15.

The responder device determines a transmission resource from the available resource objects according to the first quantity and the first random number generated by the responder device. For example, in a case that the first random number falls within the second value range, the responder device determines one resource object from the N resource objects according to the first random number as the transmission resource. N represents the first quantity.

This embodiment is described below with reference to examples.

In a case that the responder device receives a query (Query) command or the like transmitted by the reader/writer device, the responder device may determine the number of available resource objects, i.e., the first quantity, and generate a first random number. In a case that the first random number satisfies a preset condition, for example, when the first random number is less than the first quantity, the responder device determines a transmission resource from the N available resource objects based on the first random number and transmits an RN16 to the reader/writer device. In a case that the responder device receives an acknowledge (ACK) command transmitted by the reader/writer device, the responder device transmits data to the reader/writer device based on the determined transmission resource described above. The above RN16 is a random number of 16 bits in length.

In the transmission method according to the embodiments of the present application, the responder device determines a first quantity, the first quantity being the number of resource objects available to a responder device, and the resource objects including resources or resource groups. The responder device performs a first operation, the first operation including at least one of the following: determining, according to the first quantity and a first random number generated by the responder device, whether to transmit information to a reader/writer device; and determining, according to the first quantity and the first random number generated by the responder device, a transmission resource from the available resource objects. That is, in the embodiments of the present application, the responder device determines, based on the number of available resource objects and the random number generated by the responder device, at least one of whether to respond to the reader/writer device and a transmission resource for transmitting information to the reader/writer device. In this manner, the number of responder devices that the reader/writer device can inventory in a single inventory can be flexibly adjusted according to the number of resource objects available to the responder device, thereby enhancing the flexibility of the reader/writer device in inventorying the responder device.

Optionally, the determining, by the responder device according to the first quantity and a first random number generated by the responder device, whether to transmit information to a reader/writer device includes:
determining, by the responder device in a case that the first random number is less than the first quantity, to transmit information to the reader/writer device.

In this embodiment, in a case that the first random number is less than the first quantity, the responder device transmits information to the reader/writer device, that is, the responder device responds to the reader/writer device. The transmitting information to the reader/writer device described above may include transmitting the RN16, the EPC, the CRC of the data packet (Packet), and the like to the reader/writer device.

It can be understood that, in this embodiment, since all responder devices whose generated first random number is less than the first quantity can respond to the reader/writer device, in a case that the first quantity is greater than 1, more than one responder device can respond to the reader/writer device during a single inventory. This can enhance the efficiency of the reader/writer device in inventorying the responder devices.

Optionally, the method further includes:
determining, by the responder device in a case that the first random number is greater than or equal to the first quantity, at least one of not transmitting information to the reader/writer device and waiting for a random number decrement command.

In this embodiment, the above random number decrement command is used for instructing the responder device to decrement the generated random number. For example, if the current value of the first random number is M, upon receiving the random number decrement command, the responder device sets the value of the first random number after decrement to M-K, where K is the random number decrement step size.

In one implementation, in a case that the first random number is greater than or equal to the first quantity, the responder device determines not to transmit information to the reader/writer device. For example, in a case that the first random number is greater than or equal to the first quantity, the responder device determines not to transmit information to the reader/writer device during the current inventory, that is, the responder device does not respond to the reader/writer device, and in the next inventory, the responder device may regenerate a random number and compare the random number with the first quantity. Alternatively, the responder device does not transmit information to the reader/writer device during the current round of the current inventory, that is, the responder device does not respond to the reader/writer device, but upon receiving a random number decrement command, the responder device can decrement the generated random number based on the random number decrement command and compare the decremented random number with the first quantity. If the decremented random number is less than the first quantity, the responder device may respond to the reader/writer device.

In another implementation, in a case that the first random number is greater than or equal to the first quantity, the responder device waits for a random number decrement command. Upon receiving the random number decrement command, the responder device may decrement the generated random number (i.e., the first random number) based on the random number decrement command and compare the decremented random number with the first quantity. If the decremented random number is less than the first quantity, the responder device may respond to the reader/writer device.

In yet another implementation, in a case that the first random number is greater than or equal to the first quantity, the responder device determines not to transmit information to the reader/writer device, that is, it does not respond to the reader/writer device, and waits for a random number decrement command. Upon receiving the random number decrement command, the responder device may decrement the generated random number (i.e., the first random number) based on the random number decrement command and compare the decremented random number with the first quantity. If the decremented random number is less than the first quantity, the responder device may respond to the reader/writer device.

In this embodiment, each responder device determines to transmit information to the reader/writer device in a case that the generated first random number is less than the first quantity; otherwise, the responder device determines at least one of not transmitting information to the reader/writer device and waiting for a random number decrement command. This facilitates controlling the number of responder devices that respond to the reader/writer device simultaneously and reduces conflicts among the responder devices.

In some optional embodiments, in a case that at least two responder devices generate the same first random number that is less than the first quantity, a conflict avoidance mechanism may be executed. Exemplarily, the reader/writer device may instruct the at least two responder devices involved in the conflict to remain silent or not respond to the reader/writer device during the current inventory. For example, when multiple responder devices respond to the reader/writer device in a single inventory, each transmitting an RN16 random number, the reader/writer device receives the RN16 transmitted by the multiple responder devices and may provide feedback to the responder devices in the form of an ACK and the received RN16. Each responder device, upon receiving feedback in the form of the ACK and the RN16 from the reader/writer device, compares the received RN16 with the generated RN16. In a case that the generated RN16 by the responder device is not included in the received RN16, a conflict is determined. In this case, the responder devices involved in the conflict may remain silent or do not respond to the reader/writer device during the current inventory, for example, the responder devices may no longer participate in the subsequent random number decrement process of the current inventory. Alternatively, the reader/writer device may re-initiate the inventory process, that is, trigger all responder devices to regenerate random numbers and compare the random numbers with the first quantity. Alternatively, the reader/writer device may instruct the responder devices involved in the conflict described above to transmit after waiting for different durations.

Optionally, the determining, by the responder device according to the first quantity and the first random number generated by the responder device, a transmission resource from the available resource objects includes:

determining, by the responder device, a resource object corresponding to the first random number from N resource objects as the transmission resource,
where N is the first quantity, and the N resource objects are the resource objects available to the responder device.

In this embodiment, a correspondence between the N resource objects and the N random numbers may be predefined. For example, the larger the random number, the higher the frequency-domain mapping position of the corresponding resource object. Alternatively, the larger the random number, the lower the frequency-domain mapping position of the corresponding resource object. Each responder device can then determine, according to the generated random number and the above correspondence, the resource object in the N resource objects that corresponds to the random number and use the resource object as the transmission resource of the responder device. This can reduce conflicts among the transmission resources of the responder devices while saving signaling overhead for indication.

Optionally, the center frequency of a resource object may serve as an indicator of a frequency-domain mapping position of the resource object. For example, the higher the center frequency of the resource object, the higher the frequency-domain mapping position of the resource object.

Optionally, a random number with a value of i corresponds to an $(i+1)^{th}$ resource object among the N resource objects, or a random number with a value of i corresponds to an $(N-i)^{th}$ resource object among the N resource objects, where i is an integer greater than or equal to 0 and less than N.

In this embodiment, the above N resource objects may be arranged in order of frequency-domain mapping positions from high to low, or may be arranged in order of frequency-domain mapping positions from low to high. The larger the random number, the higher the frequency-domain mapping position of the corresponding resource object. Alternatively, the larger the random number, the lower the frequency-domain mapping position of the corresponding resource object.

For example, when N is 4, a random number with a value of 0 corresponds to the first resource object, a random number with a value of 1 corresponds to the second resource object, a random number with a value of 2 corresponds to the third resource object, and a random number with a value of 3 corresponds to the fourth resource object. Alternatively, a random number with a value of 0 corresponds to the fourth resource object, a random number with a value of 1 corresponds to the third resource object, a random number with a value of 2 corresponds to the second resource object, and a random number with a value of 3 corresponds to the first resource object.

For another example, when N is 4, there are four frequency positions available for mapping. If a responder device generates a random number of 2, it may be mapped to the second frequency position from top to bottom, or to the second frequency position from bottom to top. If the responder device generates a random number of 0, it may be mapped to the first frequency position from top to bottom, or to the first frequency position from bottom to top.

In this embodiment, by mapping a random number with a value of i to the $(i+1)^{th}$ resource object among the N resource objects, or mapping the random number with a value of i to the $(N-i)^{th}$ resource object among the N resource objects, the complexity of resource mapping can be reduced.

Optionally, the start position of the available resource objects may be predefined by the protocol or preconfigured by a network-side device.

Exemplarily, in a case that the above resource objects are frequency-domain resources or frequency-domain resource groups, the frequency-domain start positions of the above frequency-domain resources or frequency-domain resource groups may be predefined by the protocol or preconfigured by a network-side device.

In some optional embodiments, a network-side device may preconfigure the start positions of the available frequency-domain resource groups, the working bandwidth of the responder device, and the size of each frequency-domain resource group. In this case, based on the above pre-configuration, the responder device can determine information such as the number of frequency-domain resource groups and the frequency-domain positions of the frequency-domain resource groups.

Optionally, the method further includes:

determining, by the responder device according to the first quantity, a target step size, the target step size being a step size for the responder device to modify a random number.

Exemplarily, in a case that the above target step size is the step size for the responder device to decrement the random number, the above target step size may be referred to as the random number decrement step size. In particular, upon receiving a random number decrement command transmitted by the reader/writer device, the responder device can decrement the random number based on the above target step size.

Optionally, the target step size is less than or equal to the first quantity.

For example, in a case that ten responder devices receive a query (Query) command from the reader/writer device, and the ten responder devices generate random numbers from 0 to 9, if the number of available resource objects is 5, then in the first round of inventory, only the responder devices with the generated random numbers from 0 to 4 can transmit information uplink, while the responder devices with the generated random numbers from 5 to 9 execute a waiting mechanism. If the random number modification step size is 5, in the second round of inventory, the responder devices with random numbers from 5 to 9 update the random numbers to 0 to 4, allowing the five responder devices to transmit information uplink.

Optionally, the method further includes:

receiving, by the responder device, a control command from the reader/writer device.

The control command carries the first quantity, or the first quantity is determined according to a second quantity, the second quantity being the number of resource objects carrying the control command.

In this embodiment, the above control commands may include, but are not limited to, a query (Query) command, a query adjust (Query Adjust) command, or a QueryRep (QueryRep) command.

In one implementation, the reader/writer device may explicitly indicate the first quantity to the responder device, that is, the first quantity may be carried in the control command, enabling the responder device to accurately and quickly obtain the number of available resource objects.

In another implementation, the first quantity may be determined based on the number of resource objects carrying the control command, thereby reducing modifications to the existing control commands of the reader/writer device.

Exemplarily, a calculation formula for calculating the first quantity based on the second quantity may be predefined. For example, the first quantity may be equal to the second quantity plus L, or the first quantity may be equal to the integer part of the second quantity divided by Y, where L is an integer, and Y is a positive number. Based on the above second quantity and the calculation formula, the first quantity can be determined quickly.

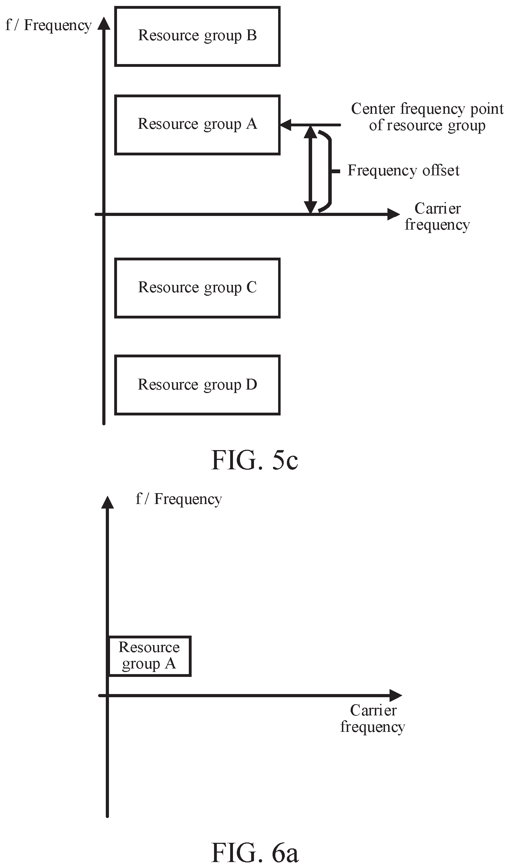

It is also to be noted that the reader/writer device transmits control commands on downlink frequency resources, the size of which may be configured or preconfigured by the network-side device. In addition, the number of downlink resource groups, the size of each resource group, and the frequency-domain position of each resource group are all configurable. For example, as shown in FIG. 5a, the control command may be carried on a resource group A. To facilitate the description of the frequency-domain position of the resource group A, a frequency reference point can be configured. This frequency reference point may be a carrier frequency used by the reader/writer device to transmit the excitation carrier signal, or it may be a virtual reference frequency point. If a relatively large number of frequency resources are available to the reader/writer device, the control command may be carried on multiple resource groups, as shown in FIG. 5b or FIG. 5c. For example, as shown in FIG. 5c, the control command may be carried on four resource groups.

Optionally, the first quantity is equal to the second quantity.

In this embodiment, the first quantity is equal to the second quantity. Thus, the number of resource objects available to the responder device can be conveniently determined based on the number of resource objects carrying the control command.

In some optional embodiments, the first quantity may be greater than the second quantity, or the first quantity may be less than the second quantity.

The following provides illustrative examples of this embodiment under different scenarios:

Scenario 1: The first quantity is equal to the second quantity.

If the bandwidth of the resource objects carrying the control command is 10 MHz, and the bandwidth of each resource object is 2 MHz, there are five resource objects, i.e., the second quantity is 5. If the bandwidth available to the responder device in this case is 10 MHz, and the bandwidth of each resource object is 2 MHz, the first quantity is also 5. In this case, the first quantity is equal to the second quantity.

Scenario 2: The first quantity is greater than the second quantity.

If the bandwidth of the resource objects carrying the control command is 10 MHz, and the bandwidth of each resource object is 2 MHz, there are five resource objects, i.e., the second quantity is 5. If the bandwidth available to the responder device in this case is 10 MHz, and the bandwidth of each resource object is 1 MHz, the first quantity is 10. In this case, the first quantity is greater than the second quantity.

Scenario 3: The first quantity is less than the second quantity.

If the bandwidth of the resource objects carrying the control command is 10 MHz, and the bandwidth of each resource object is 2 MHz, there are five resource objects, i.e., the second quantity is 5. If the bandwidth available to the responder device in this case is 5 MHz, and the bandwidth of each resource object is 2.5 MHz, the first quantity is 2. In this case, the first quantity is less than the second quantity.

Optionally, the second quantity is configured or preconfigured by a network-side device.

Alternatively, the second quantity is carried by the control command.

Alternatively, the second quantity is obtained by the responder device by detecting the resource objects carrying the control command.

Alternatively, the second quantity is determined by a sequence mapped to a preset position of the resource objects carrying the control command, where different sequences correspond to different numbers of resource objects.

The second quantity is obtained by the responder device by detecting the resource objects carrying the control command. For example, the responder device may detect the resource objects carrying the control command at multiple detection points, where the multiple detection points described above are either preconfigured or pre-indicated. The following describes the detection of the resource objects carrying the control command by the responder device with reference to an example.

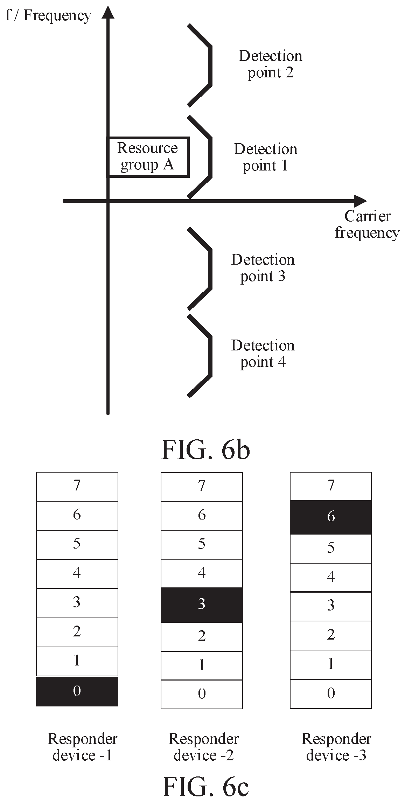

Scenario 1: When the control command is carried on one resource group, that is, the reader/writer device transmits the control command on one resource group, as shown in FIG. 6a, the responder device performs resource group detection at multiple detection points and successfully detects the control command at detection point 1, as shown in FIG. 6b. In this case, the responder device determines that the number of resource groups transmitted by the reader/writer device is one, i.e., the second quantity is 1.

In this case, if the control command further carries a count parameter Q, the responder device generates a random number within $[0, 2^Q-1]$ according to the count parameter Q and a counter. For example, when Q is equal to 4, the responder device generates a random number within [0, 15]. Since the second quantity is 1, only the responder device that generates a random number of 0 can respond to the signal transmitted by the reader/writer device, as shown in FIG. 6c. The counter of the responder device -1 generates a random number of 0, the counter of the responder device -2 generates a random number of 3, and the counter of the responder device -3 generates a random number of 6. In this case, the responder device -1 can respond to the signal transmitted by the reader/writer device, while the responder device -2 and the responder device -3 do not respond temporarily and execute a waiting mechanism.

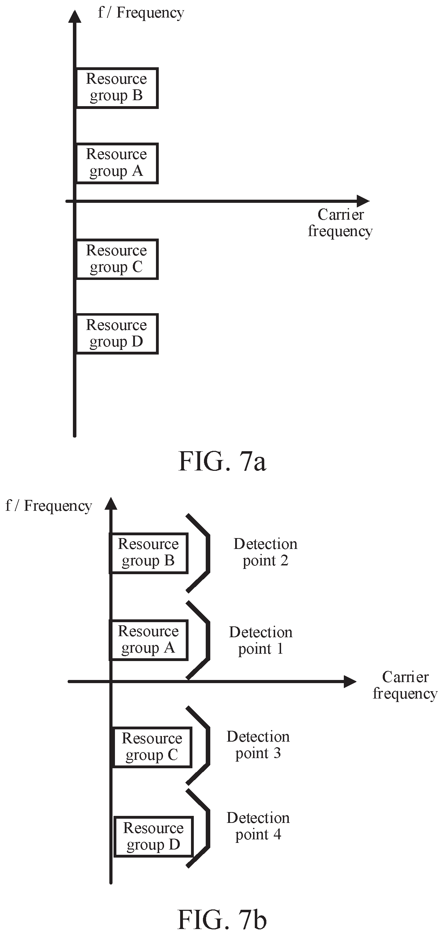

Scenario 2: When the control command transmitted by the reader/writer device is carried on four resource groups, that is, the reader/writer device transmits the control command on four resource groups, as shown in FIG. 7a, the responder device performs resource group detection at multiple detection points, as shown in FIG. 7b. In this case, the responder device determines that the number of resource groups transmitted by the reader/writer device is 4, i.e., the second quantity is 4.

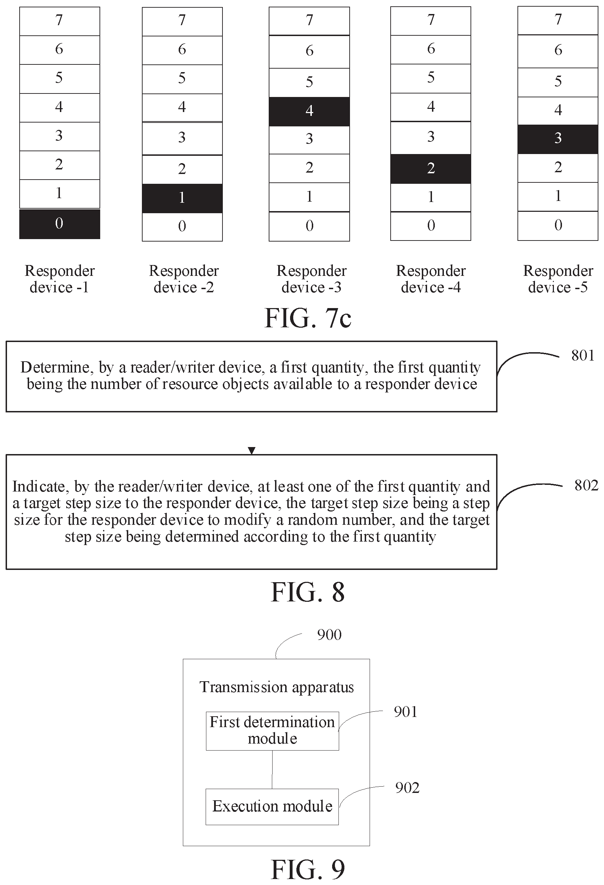

In this case, if the control command further carries a count parameter Q, the responder device generates a random number within $[0, 2^Q-1]$ according to the count parameter Q and a counter. For example, when Q is equal to 4, in this case, the responder device generates a random number within [0, 15]. Since the second quantity is 4, in this case, the responder devices that generate random numbers from 0 to 3 can respond to the signal transmitted by the reader/writer device, as shown in FIG. 7c. The counter of the responder device -1 generates a random number of 0, the counter of the responder device -2 generates a random number of 1, the counter of the responder device -3 generates a random number of 4, the counter of the responder device -4 generates a random number of 2, and the counter of the responder device -5 generates a random number of 3. Therefore, the responder device -1, the responder device - 2, the responder device -4, and the responder device -5 can respond to the reader/writer device, while the responder device -3 does not respond temporarily and executes a waiting mechanism.

The second quantity is determined by a sequence mapped to a preset position of the resource objects carrying the control command, where different sequences correspond to different numbers of resource objects. For example, a sequence indicating the above second quantity may be mapped at the start position or the end position of each resource object carrying the control command. In this way, in a case that each responder device detects the above sequence on any resource object carrying the control command, it can determine the second quantity based on the above sequence. For example, in a case that the reader/writer device maps control signaling on S resource groups, and the responder device detects the sequence indicating the second quantity on T resource groups of the S resource groups, where T is greater than or equal to 1 and less than or equal to S, the responder device can determine the number of resource groups carrying the control command according to the detected sequence. This can reduce the complexity for the responder device in detecting the number of resource objects.

Referring to FIG. 8, FIG. 8 is a flowchart of a transmission method according to an embodiment of the present application, and the method may be performed by a reader/writer device. The reader/writer device may refer to the foregoing relevant description of the reader/writer device 12, which is not repeated herein.

As shown in FIG. 8, the transmission method according to the embodiments of the present application includes the following steps:

In step 801, the reader/writer device determines a first quantity, the first quantity being the number of resource objects available to the responder device, and the resource objects including resources or resource groups.

Exemplarily, the reader/writer device may determine the first quantity according to the number of resource objects available to the responder device as indicated by the network-side device. Alternatively, the reader/writer device may determine the number of resource objects available to the responder device according to the resource configuration information or resource pre-configuration information of the responder device. For example, the network-side device may configure or preconfigure the working bandwidth of the responder device and the size of each frequency-domain resource group, enabling the responder device to determine the number of resource groups available to the responder device based on the working bandwidth of the responder device and the size of each frequency-domain resource group. Alternatively, the reader/writer device may determine the number of resource objects available to the responder device according to the number of resource objects available to the reader/writer device.

In step 802, the reader/writer device indicates at least one of the first quantity and a target step size to the responder device, the target step size being a step size for the responder device to modify a random number, and the target step size being determined according to the first quantity.

In one implementation, the reader/writer device indicates the first quantity to the responder device. Exemplarily, the reader/writer device may explicitly transmit the above first quantity to the responder device, or the reader/writer device may implicitly indicate the above first quantity to the responder device. For example, the reader/writer device indicates the first quantity to the responder device through the number of resource objects carrying the control command.

Exemplarily, upon acquiring the first quantity indicated by the reader/writer device, the responder device may determine whether to respond to the reader/writer device based on the first quantity and the random number generated by the responder device. For example, the responder device responds to the reader/writer device in a case that the generated random number is less than the first quantity; otherwise, it does not respond to the reader/writer device and executes a waiting mechanism.

In another implementation, the reader/writer device indicates the target step size to the responder device, where the above target step size is determined according to the first quantity. For example, the above target step size may be equal to the above first quantity. Exemplarily, the reader/writer device may explicitly transmit the above target step size to the responder device, or the reader/writer device may implicitly indicate the above target step size to the responder device. For example, the reader/writer device indicates the target step size to the responder device through the number of resource objects carrying the control command.

Exemplarily, upon acquiring the target step size indicated by the reader/writer device, the responder device may, upon receiving a random number decrement command transmitted by the reader/writer device, subtract the above target step size from the generated random number and determine whether to respond to the reader/writer device based on the modified random number and the first quantity. It can be understood that, in this case, the above first quantity may be determined by the responder device itself, rather than being indicated by the reader/writer device.

In yet another implementation, the reader/writer device indicates the first quantity and the target step size to the responder device. Exemplarily, the reader/writer device may explicitly transmit the first quantity and the target step size to the responder device, or the reader/writer device may implicitly indicate the above first quantity to the responder device. For example, the reader/writer device indicates the first quantity and the target step size to the responder device through the number of resource objects carrying the control command.

Exemplarily, upon acquiring the first quantity and the target step size indicated by the reader/writer device, the responder device may determine whether to respond to the reader/writer device based on the first quantity and the random number generated by the responder device. For example, the responder device responds to the reader/writer device in a case that the generated random number is less than the first quantity; otherwise, it does not respond to the reader/writer device and executes a waiting mechanism. The responder device may, upon receiving a random number decrement command transmitted by the reader/writer device, subtract the above target step size from the generated random number and determine whether to respond to the reader/writer device based on the modified random number and the first quantity.

In the transmission method according to the embodiments of the present application, the reader/writer device determines a first quantity, the first quantity being the number of resource objects available to a responder device, and the resource objects including resources or resource groups. The reader/writer device then indicates at least one of the first quantity and a target step size to the responder device, the target step size being a step size for the responder device to modify a random number, and the target step size being determined according to the first quantity. The responder device can subsequently determine whether to respond to the reader/writer device based on at least one of the first quantity and the target step size, thereby enhancing the flexibility of the inventory process.

Optionally, the target step size is less than or equal to the first quantity.

Optionally, the indicating, by the reader/writer device, at least one of the first quantity and a target step size to the responder device includes:

transmitting, by the reader/writer device, a control command to the responder device,
where the control command carries at least one of the first quantity and the target step size, or at least one of the first quantity and the target step size is indicated by a second quantity, the second quantity being the number of resource objects carrying the control command.

In this embodiment, at least one of the first quantity and the target step size is indicated by a second quantity. For example, the responder device may determine at least one of the first quantity and the target step size by detecting the number of resource objects carrying the control command. Alternatively, the control command may carry the second quantity, allowing the responder device to determine at least one of the first quantity and the target step size based on the second quantity.

Optionally, the first quantity is equal to the second quantity.

In this embodiment, the first quantity is equal to the second quantity. Thus, the responder device can conveniently determine the number of resource objects available to the responder device based on the number of resource objects carrying the control command.

In some optional embodiments, the first quantity may be greater than the second quantity, or the first quantity may be less than the second quantity.

Optionally, the method further includes:

receiving, by the reader/writer device, information transmitted by the responder device on N resource objects,
where N is the first quantity, and the N resource objects are the resource objects available to the responder device.

In this embodiment, since the number of resource objects available to the responder devices is N, up to N responder devices are allowed to perform uplink transmission on the N resource objects. Accordingly, the reader/writer device needs to receive the information transmitted by the responder devices on each of the N resource objects, thereby enhancing the inventory efficiency.

It is to be noted that the implementation of this embodiment can refer to the relevant descriptions of the embodiment shown in FIG. 4, which are not repeated herein.

It is to be noted that the transmission method according to the embodiments of the present application may be performed by a transmission apparatus, or by a control module in the transmission apparatus configured to perform the transmission method. In the embodiments of the present application, the transmission apparatus according to the embodiments of the present application is illustrated in an example where the transmission apparatus performs the transmission method.

Referring to FIG. 9, FIG. 9 is a structural diagram of a transmission apparatus according to an embodiment of the present application. As shown in FIG. 9, the transmission apparatus 900 includes:

a first determination module 901, configured to determine a first quantity, the first quantity being the number of resource objects available to a responder device, and the resource objects including resources or resource groups; and
an execution module 902, configured to perform a first operation, the first operation including at least one of the following:

determining, according to the first quantity and a first random number generated by the responder device, whether to transmit information to a reader/writer device; and
determining, according to the first quantity and the first random number generated by the responder device, a transmission resource from the available resource objects.

Optionally, the execution module is specifically configured to:
determine, in a case that the first random number is less than the first quantity, to transmit information to the reader/writer device.

Optionally, the execution module is further configured to:
determine, in a case that the first random number is greater than or equal to the first quantity, at least one of not transmitting information to the reader/writer device and waiting for a random number decrement command.

Optionally, the execution module is specifically configured to:

> determine a resource object corresponding to the first random number from N resource objects as the transmission resource,
> where N is the first quantity, and the N resource objects are the resource objects available to the responder device.

Optionally, a random number with a value of i corresponds to an $(i+1)^{th}$ resource object among the N resource objects, or a random number with a value of i corresponds to an $(N-i)^{th}$ resource object among the N resource objects, where i is an integer greater than or equal to 0 and less than N.

Optionally, the start position of the available resource objects may be predefined by the protocol or preconfigured by a network-side device.

Optionally, the first determination module is further configured to determine, according to the first quantity, a target step size, the target step size being a step size for the responder device to modify a random number.

Optionally, the target step size is less than or equal to the first quantity.

Optionally, the apparatus further includes:
a first receiving module, configured to receive a control command from the reader/writer device.

The control command carries the first quantity, or the first quantity is determined according to a second quantity, the second quantity being the number of resource objects carrying the control command.

Optionally, the first quantity is equal to the second quantity.

Optionally, the second quantity is configured or preconfigured by a network-side device.

Alternatively, the second quantity is carried by the control command.

Alternatively, the second quantity is obtained by the responder device by detecting the resource objects carrying the control command.

Alternatively, the second quantity is determined by a sequence mapped to a preset position of the resource objects carrying the control command, where different sequences correspond to different numbers of resource objects.

Optionally, a value range of the first random number is $[0, 2^Q-1]$, where Q is a count parameter received by the responder device from the reader/writer device, and Q is an integer greater than or equal to 1.

The transmission apparatus in the embodiments of the present application may be an electronic device, for example, an electronic device having an operating system, or a component in an electronic device, such as an integrated circuit or a chip. The electronic device may be a responder device or another device other than the responder device. Exemplarily, the responder device may include, but is not limited to, the types of responder device 11 listed above, and other devices may include a server, a network attached storage (Network Attached Storage, NAS), or the like, which are not specifically limited in the embodiments of the present application.

The transmission apparatus according to the embodiments of the present application can implement the processes implemented in the method embodiments illustrated in FIG. 4, and achieve the same technical effects. To avoid repetition, a detailed description is omitted herein.

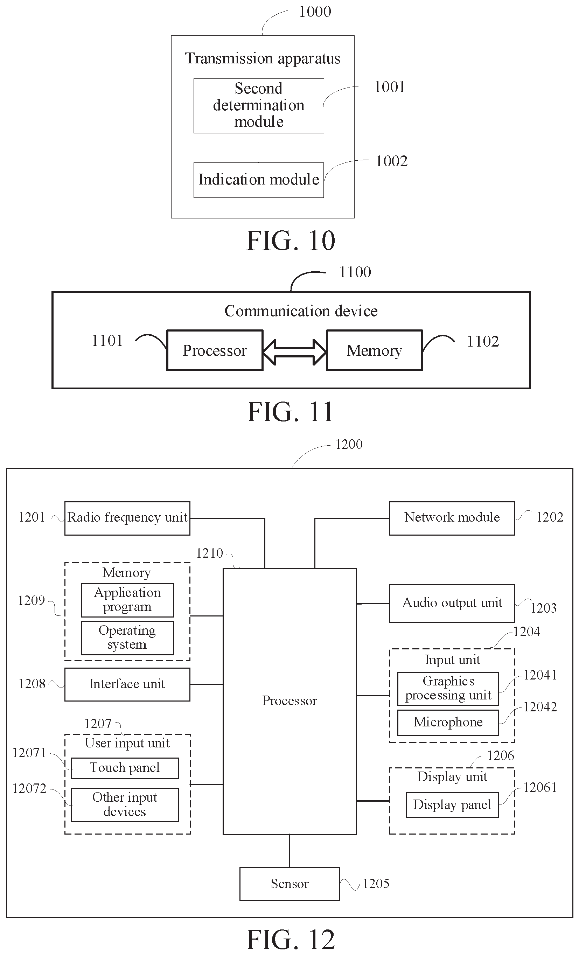

Referring to FIG. 10, FIG. 10 is a structural diagram of a transmission apparatus according to an embodiment of the present application. As shown in FIG. 10, the transmission apparatus 1000 includes:

> a second determination module 1001, configured to determine a first quantity, the first quantity being the number of resource objects available to a responder device, and the resource objects including resources or resource groups; and
> an indication module 1002, configured to indicate at least one of the first quantity and a target step size to the responder device, the target step size being a step size for the responder device to modify a random number, and the target step size being determined according to the first quantity.

Optionally, the target step size is less than or equal to the first quantity.

Optionally, the indication module is specifically configured to:

> transmit a control command to the responder device,

where the control command carries at least one of the first quantity and the target step size, or at least one of the first quantity and the target step size is indicated by a second quantity, the second quantity being the number of resource objects carrying the control command.

Optionally, the first quantity is equal to the second quantity.

Optionally, the apparatus further includes:

a second receiving module, configured to receive information transmitted by the responder device on N resource objects,

where N is the first quantity, and the N resource objects are the resource objects available to the responder device.

The transmission apparatus in the embodiments of the present application may be an electronic device, for example, an electronic device having an operating system, or a component in an electronic device, such as an integrated circuit or a chip. The electronic device may be a reader/writer device or another device other than the reader/writer device. Exemplarily, the reader/writer device may include, but is not limited to, the types of reader/writer devices 12 listed above, and other devices may include a server, a network attached storage (Network Attached Storage, NAS), or the like, which are not specifically limited in the embodiments of the present application.

The transmission apparatus according to the embodiments of the present application can implement the processes implemented in the method embodiments illustrated in FIG. 8, and achieve the same technical effects. To avoid repetition, a detailed description is omitted herein.

Optionally, as shown in FIG. 11, the embodiments of the present application further provide a communication device 1100, which includes a processor 1101 and a memory 1102. The memory 1102 has programs or instructions executable by the processor 1101 stored therein. For example, when the communication device 1100 is a responder device, the programs or instructions, when executed by the processor 1101, implement steps of the above responder-device-side transmission method embodiments and achieve the same technical effects. When the communication device 1100 is a reader/writer device, the programs or instructions, when executed by the processor 1101, implement steps of the above reader/writer-device-side transmission method embodiments and achieve the same technical effects. To avoid repetition, a detailed description is omitted herein.

The embodiments of the present application further provide a responder device including a processor and a communication interface, where the processor is configured to: determine a first quantity, the first quantity being the number of resource objects available to a responder device, and the resource objects including resources or resource groups; and perform a first operation, the first operation including at least one of the following: determining, according to the first quantity and a first random number generated by the responder device, whether to transmit information to a reader/writer device; and determining, according to the first quantity and the first random number generated by the responder device, a transmission resource from the available resource objects. The responder device embodiment corresponds to the above responder-device-side method embodiments. The processes and implementations of the above method embodiments are applicable to the responder device embodiment and can achieve the same technical effects. In particular, FIG. 12 is a schematic diagram of a hardware structure of a responder device for implementing an embodiment of the present application.

The responder device 1200 includes, but is not limited to, at least part of the following components: a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art may understand that the responder device 1200 may further include a power supply (e.g., a battery) configured to provide power to the components. The power supply can be logically connected to the processor 1210 via a power management system, thereby enabling the management of charging, discharging, and power consumption via the power management system. A structure of the responder device shown in FIG. 12 constitutes no limitation on the responder device. The responder device may include more or fewer components than those illustrated, may combine certain components, or may have different component arrangements, which are not repeated herein.

It is to be understood that, in the embodiments of the present application, the input unit 1204 may include a graphics processing unit (Graphics Processing Unit, GPU) 12041 and a microphone 12042. The graphics processing unit 12041 processes image data of static images or videos captured by an image capture apparatus (such as a camera) in video capture mode or image capture mode. The display unit 1206 may include a display panel 12061. The display panel 12061 may be configured in the form of a liquid crystal display, an organic light-emitting diode, or the like. The user input unit 1207 includes at least one of a touch panel 12071 and other input devices 12072. The touch panel 12071 is also referred to as a touchscreen. The touch panel 12071 may include two parts: a touch detection apparatus and a touch controller. Other input devices 12072 may include, but are not limited to, a physical keyboard, function keys (e.g., volume control keys, power keys, etc.), a trackball, a mouse, or a joystick, which are not repeated herein.

In the embodiments of the present application, the radio frequency unit 1201 may transmit downlink data received from a network-side device to the processor 1210 for processing. Additionally, the radio frequency unit 1201 may transmit uplink data to the network-side device. Generally, the radio frequency unit 1201 includes, but is not limited to, an antenna, an amplifier, a transceiver, a coupler, a low-noise amplifier, and a duplexer.

The memory 1209 may be configured to store software programs or instructions, as well as various data. The memory 1209 may mainly include a first storage area for storing programs or instructions and a second storage area for storing data. The first storage area may store an operating system, at least one application program or instruction required for a function (such as audio playback, image playback, etc.), and the like. In addition, the memory 1209 may include volatile memory or non-volatile memory. The non-volatile memory may include a read-only memory (Read-Only Memory, ROM), a programmable ROM (Programmable ROM, PROM), an erasable PROM (Erasable PROM, EPROM), an electrically EPROM (Electrically EPROM, EEPROM), or flash memory. Volatile memory may include random access memory (Random Access Memory, RAM), static RAM (Static RAM, SRAM), dynamic RAM (Dynamic RAM, DRAM), synchronous DRAM (Synchronous DRAM, SDRAM), double data rate SDRAM (Double Data Rate SDRAM, DDRSDRAM), enhanced SDRAM (Enhanced SDRAM, ESDRAM), Synch link DRAM (Synch link DRAM, SLDRAM), or Direct Rambus RAM (Direct Rambus RAM, DRRAM). The memory 1209 in the embodiments of the present application includes, but is not limited to, the above types of memory and any other suitable types of memory.

The processor 1210 may include one or more processing units. Optionally, the processor 1210 integrates an application processor and a modem processor. The application processor primarily handles operations related to the operating system, user interface, application programs, and the like. The modem processor primarily handles wireless communication signals, such as a baseband processor. It can be understood that the above modem processor may not be integrated into the processor 1210.

The processor 1210 is configured to determine a first quantity, the first quantity being the number of resource objects available to a responder device, and the resource objects including resources or resource groups.

The processor 1210 is further configured to perform a first operation, the first operation including at least one of the following: determining, according to the first quantity and a first random number generated by the responder device, whether to transmit information to a reader/writer device; and determining, according to the first quantity and the first random number generated by the responder device, a transmission resource from the available resource objects.

Optionally, the processor 1210 is specifically configured to:
determine, in a case that the first random number is less than the first quantity, to transmit information to the reader/writer device.

Optionally, the processor 1210 is further configured to:
determine, in a case that the first random number is greater than or equal to the first quantity, at least one of not transmitting information to the reader/writer device and waiting for a random number decrement command.

Optionally, the processor 1210 is specifically configured to:

determine a resource object corresponding to the first random number from N resource objects as the transmission resource,
where N is the first quantity, and the N resource objects are the resource objects available to the responder device.

Optionally, a random number with a value of i corresponds to an $(i+1)^{th}$ resource object among the N resource objects, or a random number with a value of i corresponds to an $(N-i)^{th}$ resource object among the N resource objects, where i is an integer greater than or equal to 0 and less than N.

Optionally, the start position of the available resource objects may be predefined by the protocol or preconfigured by a network-side device.

Optionally, the processor 1210 is further configured to:
determine, according to the first quantity, a target step size, the target step size being a step size for the responder device to modify a random number.

Optionally, the target step size is less than or equal to the first quantity.

Optionally, the radio frequency unit 1201 is configured to receive a control command from the reader/writer device.

The control command carries the first quantity, or the first quantity is determined according to a second quantity, the second quantity being the number of resource objects carrying the control command.

Optionally, the first quantity may be less than, equal to, or greater than the second quantity.

Optionally, the second quantity is configured or preconfigured by a network-side device.

Alternatively, the second quantity is carried by the control command.

Alternatively, the second quantity is obtained by the responder device by detecting the resource objects carrying the control command.

Alternatively, the second quantity is determined by a sequence mapped to a preset position of the resource objects carrying the control command, where different sequences correspond to different numbers of resource objects.

Optionally, a value range of the first random number is $[0, 2^Q-1]$, where Q is a count parameter received by the responder device from the reader/writer device, and Q is an integer greater than or equal to 1.

It can be understood that the implementation processes of the implementations described in this embodiment may refer to the related description of the foregoing method embodiments, and can achieve the same or equivalent technical effects. To avoid repetition, a detailed description is omitted herein.

It is to be noted that the above device may implement the steps of the method shown in FIG. 8, or may implement the method performed by each module shown in FIG. 10.

The embodiments of the present application further provide a reader/writer device including a processor and a communication interface, where the processor is configured to determine a first quantity, the first quantity being the number of resource objects available to a responder device, and the resource objects including resources or resource groups; and the communication interface is configured to indicate at least one of the first quantity and a target step size to the responder device, the target step size being a step size for the responder device to modify a random number, and the target step size being determined according to the first quantity. The reader/writer device embodiment corresponds to the above reader/writer device method embodiments. The processes and implementations of the above method embodiments are applicable to the reader/writer device embodiment and can achieve the same technical effects.

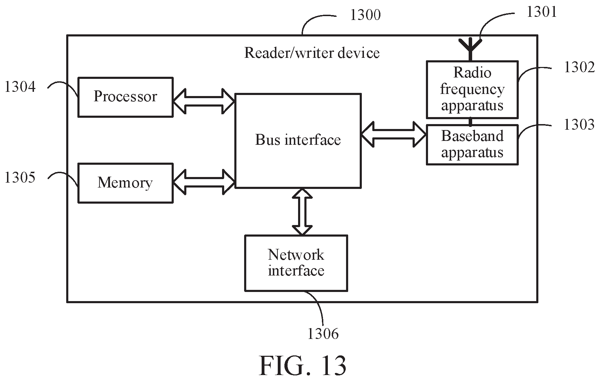

In particular, the embodiments of the present application further provide a reader/writer device. As shown in FIG. 13, the reader/writer device 1300 includes an antenna 1301, a radio frequency apparatus 1302, a baseband apparatus 1303, a processor 1304, and a memory 1305. The antenna 1301 is connected to the radio frequency apparatus 1302. In the upstream direction, the radio frequency apparatus 1302 receives information via the antenna 1301 and transmits the received information to the baseband apparatus 1303 for processing. In the downlink direction, the baseband apparatus 1303 processes the information to be transmitted and transmits the information to the radio frequency apparatus 1302, and the radio frequency apparatus 1302 processes the received information and transmits the information via the antenna 1301.

The method performed by the reader/writer device in the above embodiments can be implemented in the baseband apparatus 1303, and the baseband apparatus 1303 includes a baseband processor.

The baseband apparatus 1303 may, for example, include at least one baseband board, and the baseband board is provided with multiple chips, as shown in FIG. 13. One of the chips, for example, is the baseband processor, which is connected to the memory 1305 via a bus interface to call programs in the memory 1305 and execute the network device operations shown in the method embodiments above.

The reader/writer device may include a network interface 1306, which may be, for example, a common public radio interface (Common Public Radio Interface, CPRI).

In particular, the reader/writer device 1300 of the embodiments of the present application further includes instructions or programs stored in the memory 1305 and executable on the processor 1304. The processor 1304 calls the instructions or programs from the memory 1305 to execute the methods performed by the modules shown in FIG. 10, achieving the same technical effects. To avoid repetition, a detailed description is omitted herein.

The embodiments of the present application further provide a readable storage medium having programs or instructions stored therein. The programs or instructions, when executed by a processor, implement the processes of the above transmission method embodiments and achieve the same technical effects. To avoid repetition, a detailed description is omitted herein.

The processor is a processor of the responder device described in the above embodiments. The readable storage medium includes a computer-readable storage medium, such as a computer read-only memory ROM, a random access memory RAM, a magnetic disk, or an optical disk. In some examples, the readable storage medium may be a non-transitory readable storage medium.

The embodiments of the present application further provide a chip including a processor and a communication interface. The communication interface is coupled to the processor. The processor is configured to execute programs or instructions to implement the processes of the above transmission method embodiments and achieve the same technical effects. To avoid repetition, a detailed description is omitted herein.

It is to be understood that the chip mentioned in the embodiments of the present application may be referred to as a system-on-chip, a system chip, a chip system, or an on-chip system, and the like.

The embodiments of the present application further provide a computer program/program product stored on a storage medium, the program/program product being executed by at least one processor to implement the processes of the above transmission method embodiments and achieve the same technical effects. To avoid repetition, a detailed description is omitted herein.

The embodiments of the present application further provide a transmission system, including a responder device and a reader/writer device. The responder device is configured to perform the processes of the method embodiment shown in FIG. 4 and the method embodiments described above, and the reader/writer device is configured to perform the processes of the method embodiment shown in FIG. 8 and the method embodiments described above, and can achieve the same technical effects. To avoid repetition, a detailed description is omitted herein.

It is to be noted that, as used herein, the terms "include", "comprise", and any of other variants are intended to encompass non-exclusive inclusion, such that a process, method, article, or apparatus that includes a series of elements not only includes those elements but also may include other elements not explicitly listed, or elements inherent to such a process, method, article, or apparatus. In the absence of further limitations, an element defined by the statement "including one ..." does not exclude the presence of additional identical elements in a process, method, article, or apparatus that includes the element. In addition, it is to be noted that the scope of the method and apparatus in implementations of the present application is not limited to performing functions in the order shown or discussed. Functions may be performed substantially simultaneously or in an order opposite to that described. For example, the method described may be executed in an order different from that illustrated, and various steps may be added, omitted, or combined. Additionally, features described in reference to certain examples may be combined in other examples.

From the description of the above implementations, a person skilled in the art can clearly understand that the methods of the above embodiments can be implemented by a computer software product together with a necessary general-purpose hardware platform, or, alternatively, entirely by hardware. The computer software product is stored in a storage medium (such as ROM, RAM, magnetic disk, and optical disk) and includes multiple instructions configured to cause a responder device or a network-side device to perform the methods described in the embodiments of the present application.

The embodiments of the present application have been described above with reference to the drawings. However, the present application is not limited to the specific implementations described above. The above specific implementations are illustrative rather than restrictive. A person of ordinary skill in the art, in light of the teachings of the present application, may make various modifications and variations without departing from the scope of the spirit of the present application and the claims, all of which are intended to be encompassed within the protection of the present application.

**Claims**

1. A transmission method, comprising:

   determining, by a responder device, a first quantity, the first quantity being the number of resource objects available to the responder device, and the resource objects comprising resources or resource groups; and
   performing, by the responder device, a first operation, the first operation comprising at least one of the following:

      determining, according to the first quantity and a first random number generated by the responder device, whether to transmit information to a reader/writer device; and
      determining, according to the first quantity and the first random number generated by the responder device, a transmission resource from the available resource objects.

2. The method according to claim **1,** wherein the determining, by the responder device according to the first quantity and a first random number generated by the responder device, whether to transmit information to a reader/writer device comprises:
   determining, by the responder device in a case that the first random number is less than the first quantity, to transmit information to the reader/writer device.

3. The method according to claim 2, further comprising:
   determining, by the responder device in a case that the first random number is greater than or equal to the first quantity, at least one of not transmitting information to the reader/writer device and waiting for a random number decrement command.

4. The method according to any one of claims 1 to 3, wherein the determining, by the responder device according to the first quantity and the first random number generated by the responder device, a transmission resource from the available resource objects comprises:

   determining, by the responder device, a resource object corresponding to the first random number from N resource objects as the transmission resource,
   wherein N is the first quantity, and the N resource objects are the resource objects available to the responder device.

5. The method according to claim 4, wherein a random number with a value of i corresponds to an $(i+1)^{th}$ resource object among the N resource objects, or a random number with a value of i corresponds to an $(N-i)^{th}$ resource object among the N resource objects, wherein i is an integer greater than or equal to 0 and less than N.

6. The method according to any one of claims 1 to 5, further comprising:
determining, by the responder device according to the first quantity, a target step size, the target step size being a step size for the responder device to modify a random number.

7. The method according to claim 6, wherein the target step size is less than or equal to the first quantity.

8. The method according to any one of claims 1 to 7, further comprising:

   receiving, by the responder device, a control command from the reader/writer device,
   wherein the control command carries the first quantity, or the first quantity is determined according to a second quantity, the second quantity being the number of resource objects carrying the control command.

9. The method according to claim 8, wherein the first quantity is equal to the second quantity.

10. The method according to claim 8 or 9, wherein

    the second quantity is configured or preconfigured by a network-side device;
    or the second quantity is carried by the control command;
    or the second quantity is obtained by the responder device by detecting the resource objects carrying the control command;
    or the second quantity is determined by a sequence mapped to a preset position of the resource objects carrying the control command, wherein different sequences correspond to different numbers of resource objects.

11. The method according to any one of claims 1 to 10, wherein a value range of the first random number is $[0, 2^Q-1]$, wherein Q is a count parameter received by the responder device from the reader/writer device, and Q is an integer greater than or equal to 1.

12. A transmission method, comprising:

    determining, by a reader/writer device, a first quantity, the first quantity being the number of resource objects available to a responder device, and the resource objects comprising resources or resource groups; and
    indicating, by the reader/writer device, at least one of the first quantity and a target step size to the responder device, the target step size being a step size for the responder device to modify a random number, and the target step size being determined according to the first quantity.

13. The method according to claim 12, wherein the target step size is less than or equal to the first quantity.

14. The method according to claim 12 or 13, wherein the indicating, by the reader/writer device, at least one of the first quantity and a target step size to the responder device comprises:

    transmitting, by the reader/writer device, a control command to the responder device,
    wherein the control command carries at least one of the first quantity and the target step size, or at least one of the first quantity and the target step size is indicated by a second quantity, the second quantity being the number of resource objects carrying the control command.

15. The method according to claim 14, wherein the first quantity is equal to the second quantity.

16. The method according to any one of claims 12 to 15, further comprising:

    receiving, by the reader/writer device, information transmitted by the responder device on N resource objects, wherein N is the first quantity, and the N resource objects are the resource objects available to the responder device.

17. A transmission apparatus, comprising:

a first determination module, configured to determine a first quantity, the first quantity being the number of resource objects available to a responder device, and the resource objects comprising resources or resource groups; and

an execution module, configured to perform a first operation, the first operation comprising at least one of the following:

determining, according to the first quantity and a first random number generated by the responder device, whether to transmit information to a reader/writer device; and

determining, according to the first quantity and the first random number generated by the responder device, a transmission resource from the available resource objects.

18. A transmission apparatus, comprising:

a second determination module, configured to determine a first quantity, the first quantity being the number of resource objects available to a responder device, and the resource objects comprising resources or resource groups; and

an indication module, configured to indicate at least one of the first quantity and a target step size to the responder device, the target step size being a step size for the responder device to modify a random number, and the target step size being determined according to the first quantity.

19. A responder device comprising a processor and a memory, the memory storing programs or instructions executable by the processor, and the programs or instructions, when executed by the processor, implementing steps of the transmission method according to any one of claims 1 to 11.

20. A reader/writer device comprising a processor and a memory, the memory storing programs or instructions executable by the processor, and the programs or instructions, when executed by the processor, implementing steps of the transmission method according to any one of claims 12 to 16.

21. A readable storage medium having programs or instructions stored therein, the programs or the instructions, when executed by a processor, implementing steps of the transmission method according to any one of claims 1 to 11, or implementing steps of the transmission method according to any one of claims 12 to 16.

EP 4 776 662 A1

Network-side
device

13

12

Reader/writer
device

11

Responder
device

FIG. 1

Reader

Command,
continuous wave

Backscatter

Tag

FIG. 2

Single-tag response

Select

Query

ACK

QueryRep

Reader | Select | CW | Query | CW | Ack | CW | QueryRep |

NAK

NAK

Tag

RN16

PC/XPC,EPC,CRC

$T_4$  $T_1$  $T_2$  $T_1$  $T_2$

FIG. 3

22

| Determine, by a responder device, a first quantity, the first quantity being the number of resource objects available to the responder device | 401 |

| Perform, by the responder device, a first operation, the first operation including at least one of the following:<br>determining, according to the first quantity and a first random number generated by the responder device, whether to transmit information to a reader/writer device; and determining, according to the first quantity and the first random number generated by the responder device, a transmission resource from the available resource objects | 402 |

FIG. 4

FIG. 5a

FIG. 5b

f / Frequency

Resource group B

Resource group A

Center frequency point
of resource group

Frequency offset

Carrier
frequency

Resource group C

Resource group D

FIG. 5c

f / Frequency

Resource
group A

Carrier
frequency

FIG. 6a

f / Frequency

Detection
point 2

Resource
group A

Detection
point 1

Carrier
frequency

Detection
point 3

Detection
point 4

## FIG. 6b

| 7 | 7 | 7 |
|---|---|---|
| 6 | 6 | **6** |
| 5 | 5 | 5 |
| 4 | 4 | 4 |
| 3 | **3** | 3 |
| 2 | 2 | 2 |
| 1 | 1 | 1 |
| **0** | 0 | 0 |

| Responder device -1 | Responder device -2 | Responder device -3 |

## FIG. 6c

FIG. 7a

FIG. 7b

| 7 | | 7 | | 7 | | 7 | | 7 |
|---|---|---|---|---|---|---|---|---|
| 6 | | 6 | | 6 | | 6 | | 6 |
| 5 | | 5 | | 5 | | 5 | | 5 |
| 4 | | 4 | | **4** | | 4 | | 4 |
| 3 | | 3 | | 3 | | 3 | | **3** |
| 2 | | 2 | | 2 | | **2** | | 2 |
| 1 | | **1** | | 1 | | 1 | | 1 |
| **0** | | 0 | | 0 | | 0 | | 0 |

Responder device -1     Responder device -2     Responder device -3     Responder device -4     Responder device -5

## FIG. 7c

Determine, by a reader/writer device, a first quantity, the first quantity being the number of resource objects available to a responder device — 801

Indicate, by the reader/writer device, at least one of the first quantity and a target step size to the responder device, the target step size being a step size for the responder device to modify a random number, and the target step size being determined according to the first quantity — 802

## FIG. 8

900

Transmission apparatus

First determination module — 901

Execution module — 902

## FIG. 9

1000

Transmission apparatus

Second determination module — 1001

Indication module — 1002

FIG. 10

1100

Communication device

1101 Processor ⟺ Memory 1102

FIG. 11

1200

1201 Radio frequency unit

Network module 1202

1210

Memory

1209 Application program

Operating system

1208 Interface unit

1207

User input unit

12071 Touch panel

12072 Other input devices

Processor

Audio output unit 1203

1204

Input unit

Graphics processing unit 12041

Microphone 12042

1206

Display unit

Display panel 12061

Sensor 1205

FIG. 12

1300

1301

Reader/writer device

1304

Processor

1305

Memory

Bus interface

Network
interface

1306

Radio
frequency
apparatus

1302

Baseband
apparatus

1303

FIG. 13

## INTERNATIONAL SEARCH REPORT

| | International application No. |
|---|---|
| | **PCT/CN2024/114953** |

**A.    CLASSIFICATION OF SUBJECT MATTER**

H04W4/80(2018.01)i

According to International Patent Classification (IPC) or to both national classification and IPC

**B.    FIELDS SEARCHED**

Minimum documentation searched (classification system followed by classification symbols)

IPC:H04W,G06K

Documentation searched other than minimum documentation to the extent that such documents are included in the fields searched

Electronic data base consulted during the international search (name of data base and, where practicable, search terms used)

CNABS; CNTXT; VEN; ENTXTC; 3GPP: 阅读器, 读写器, 读取器, 标签, 盘点, 清点, 清查, 随机数, 随机值, 随机码, 资源, 资源块, 对象, 数量, Reader, Tag, Inventory, random, resource?, object?, number, RN16

**C.    DOCUMENTS CONSIDERED TO BE RELEVANT**

| Category* | Citation of document, with indication, where appropriate, of the relevant passages | Relevant to claim No. |
|---|---|---|
| A | CN 115942282 A (ZTE CORP.) 07 April 2023 (2023-04-07) description, paragraphs 161-172 | 1-21 |
| A | CN 113283260 A (SHENZHEN CHAINWAY INFORMATION TECHNOLOGY CO., LTD.) 20 August 2021 (2021-08-20) entire document | 1-21 |
| A | CN 109002743 A (SHENZHEN CHAINWAY INFORMATION TECHNOLOGY CO., LTD.) 14 December 2018 (2018-12-14) entire document | 1-21 |
| A | CN 114970581 A (TSINGHUA UNIVERSITY) 30 August 2022 (2022-08-30) entire document | 1-21 |
| A | CN 114980352 A (SHANGHAI HUAWEI TECHNOLOGIES CO., LTD.) 30 August 2022 (2022-08-30) entire document | 1-21 |
| A | CN 116321083 A (HUAWEI TECHNOLOGIES CO., LTD.) 23 June 2023 (2023-06-23) entire document | 1-21 |

☐ Further documents are listed in the continuation of Box C.  ☑ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"  document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **06 November 2024** | **08 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/114953**

| Patent document cited in search report | | | Publication date (day/month/year) | Patent family member(s) | | | Publication date (day/month/year) |
|---|---|---|---|---|---|---|---|
| CN | 115942282 | A | 07 April 2023 | None | | | |
| CN | 113283260 | A | 20 August 2021 | None | | | |
| CN | 109002743 | A | 14 December 2018 | None | | | |
| CN | 114970581 | A | 30 August 2022 | None | | | |
| CN | 114980352 | A | 30 August 2022 | MX | 2023009951 | A | 04 September 2023 |
| | | | | EP | 4283513 | A1 | 29 November 2023 |
| | | | | EP | 4283513 | A4 | 17 July 2024 |
| | | | | US | 2023401397 | A1 | 14 December 2023 |
| | | | | WO | 2022179340 | A1 | 01 September 2022 |
| CN | 116321083 | A | 23 June 2023 | None | | | |

**REFERENCES CITED IN THE DESCRIPTION**

**Patent documents cited in the description**

- CN 202311136513